(19) **Europäisches Patentamt**

**European Patent Office**

**Office européen des brevets**

(11) Veröffentlichungsnummer: **0 283 812 B1**

(12) **EUROPÄISCHE PATENTSCHRIFT**

(45) Veröffentlichungstag der Patentschrift: **20.05.92**

(21) Anmeldenummer: **88103489.6**

(22) Anmeldetag: **07.03.88**

(51) Int. Cl.⁵: **H04M 1/08**

(54) **Handapparatablage für Münzfernsprecher.**

(30) Priorität: **27.03.87 DE 3710130**

(43) Veröffentlichungstag der Anmeldung:
**28.09.88 Patentblatt 88/39**

(45) Bekanntmachung des Hinweises auf die
Patenterteilung:
**20.05.92 Patentblatt 92/21**

(84) Benannte Vertragsstaaten:
**AT BE CH DE ES FR GB GR IT LI LU NL SE**

(56) Entgegenhaltungen:
**WO-A-82/02989**
**DE-A- 1 762 717**
**DE-A- 2 917 196**
**DE-C- 544 670**

(73) Patentinhaber: **Standard Elektrik Lorenz Aktiengesellschaft
Lorenzstrasse 10
W-7000 Stuttgart 40(DE)**

(72) Erfinder: **Hauf, Rudi
Redtenbacher Strasse 84
W-7530 Pforzheim(DE)**
Erfinder: **Wenger, Joachim
Friedrichstrasse 46 A
W-7530 Pforzheim(DE)**

(74) Vertreter: **Gähr, Hans-Dieter, Dipl.-Ing. (FH) et
al
Standard Elektrik Lorenz AG Patent- und Lizenzwesen Postfach 30 09 29
W-7000 Stuttgart 30(DE)**

**Beschreibung**

Die Erfindung betrifft eine Handapparatablage für Münzfernsprecher nach dem Oberbegriff des Anspruchs 1.

Bei Münzfernsprechern, vor allem älterer Bauart, ragt als Ablage für den Handapparat ein gabelartiger, gewölbter Bügel am Ende eines Hebels seitlich aus dem Gerät, in den das Hörteil des Handapparates eingehängt werden kann. Beim Einhängen wird der Hebel abwärts bewegt und betätigt im Innern des Gerätes den sogenannten Hakenumschalter. Wird der Handapparat abgenommen, so wird das Gerät rufbereit geschaltet. Bei modernen Geräten ist an der Vorderseite eine feststehende Mulde anstelle des Bügels zur Aufnahme des Hörteiles des Handapparates vorgesehen. In die Mulde ist der Hebel des Hakenumschalters so integriert, daß er durch den Handapparat beim Einhängen betätigt wird. (Unterrichtsblätter der Deutschen Bundespost: Fernwahlmünzfernsprecher bei der DBP, 1. Aufl., November 1981).

Der Erfindung liegt die Aufgabe zugrunde, eine andere Ablage für den Handapparat zu schaffen, die mehr Sicherheit gegen Vandalismus und Mißbrauch des Hakenumschalters gewährleistet. Gelöst wird diese Aufgabe durch die im Kennzeichen des Anspruchs 1 angegebenen Merkmale. Weiterbildungen sind den Unteransprüchen zu entnehmen. Die Vorteile dieser Konstruktion liegen einmal darin, daß die Durchführung der Wellen durch die Gehäusewand dicht ist und keine Eingriffsmöglichkeit bietet wie ein Schlitz für einen beweglichen Hebel. Bei Bewegung der Schwenkhebel in die falsche Richtung erfolgt Entkupplung zur Funktionsbaugruppe (Getriebe,Schalter), wodurch Beschädigungen ausgeschlossen sind, d.h. die Einrichtung bleibt jederzeit funktionsfähig. Die Schwenkhebel können sehr robust ausgeführt werden, dennoch ist die Handapparatablage sicher und bedienungsfreundlich.

Die Erfindung wird an einem Ausführungsbeispiel beschrieben, das in den zugehörigen Zeichnungen dargestellt ist. Darin zeigen

Fig. 1    einen Ausschnitt der Handapparatablage eines Münzfernsprechers mit auf zwei Schwenkhebeln eingehängtem Handapparat, in Vorderansicht;

Fig. 2    die Ablage nach Fig. 1 ohne Handapparat, und

Fig. 3    das mit den beiden Schwenkhebeln in Fig. 1 verbundene Getriebe im Innern des Münzfernsprechers, schematisch.

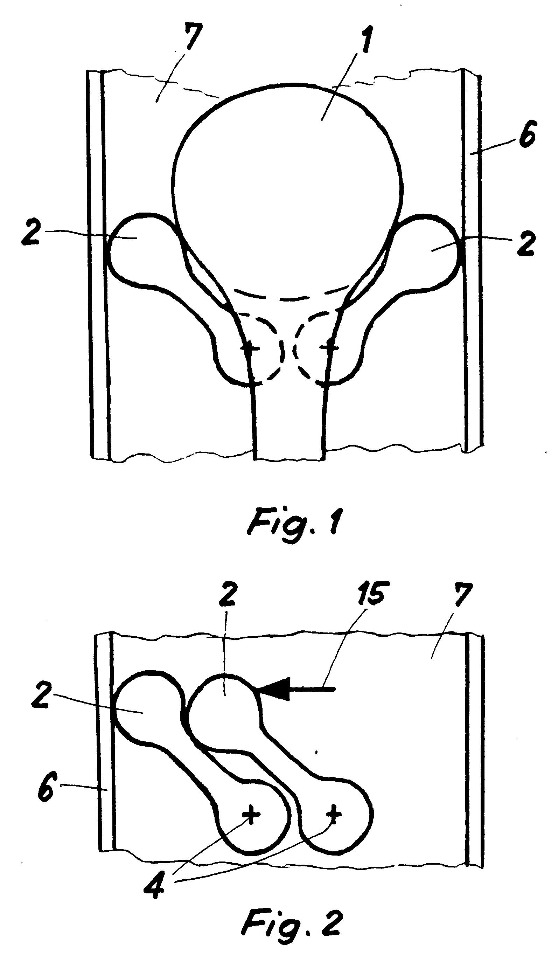

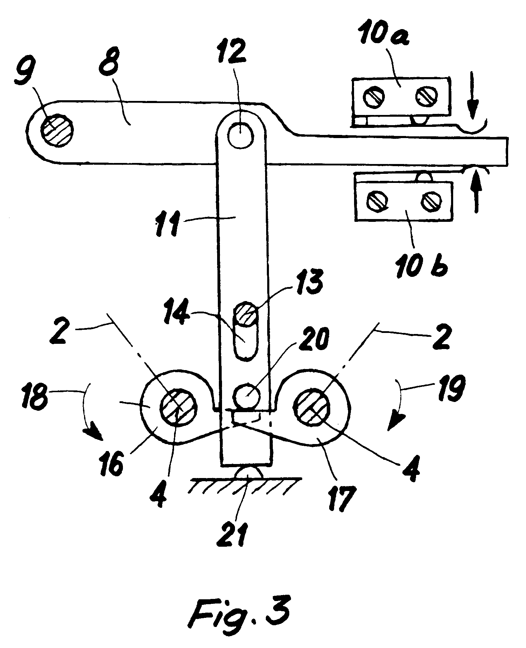

In Fig. 1 ist der Handapparat 1 eines Münzfernsprechers mit seinem Hörteil auf zwei Schwenkhebel 2 gehängt, die V-förmig nach oben gespreizt und unten jeweils auf einer Welle 4 befestigt sind. Die Wellen führen durch die Wand der Ablage 7 ins Innere des Gerätes und sind in den Fig. 1 und 2 nur durch Achsenkreuze angedeutet. Die Schwenkhebel 2 haben knochen- oder hantelförmige Gestalt, um dem Handapparat 1 eine sichere Auflage zu geben. Beim Einhängen des Handapparates 1 schwenken die Schwenkhebel 2 auseinander bis sie an Seitenwänden 6 der Ablage 7 anschlagen. Dabei dreht sich der linke Schwenkhebel 2 entgegen, der rechte Schwenkhebel in dem Uhrzeigersinn. Wird der Handapparat 1 abgenommen, so drehen sich die Schwenkhebel 2 jeweils um einen bestimmten Winkel, beispielsweise um 10°, in die entgegengesetzten Richtungen, d.h. ihre oberen Enden kommen einander näher. Durch diese Schwenkbewegungen wird im Innern des Gerätes durch die beiden Wellen 4 über ein Getriebe gemäß Fig. 3 der Hakenumschalter betätigt.

Das Getriebe nach Fig. 3 hat einen einarmigen Hebel 8, der bei 9 drehbar im Gerät gelagert ist. Das freie Ende dieses Hebels 8 wirkt auf den Hakenumschalter, der beim dargestellten Beispiel aus einem oberen Schalter 10a (Schließer) und einem unteren Schalter 10b (Öffner) besteht, die über und unter dem Hebel 8 angebracht sind. Etwa in seiner Mitte ist mit diesem Hebel 8 eine Getriebestange 11 durch ein Gelenk 12 verbunden, die etwa senkrecht zu ihm steht. Die Getriebestange 11 wird auf einem Führungsstift 13 geführt, der sie ungefähr auf halber Länge in einem Langloch 14 durchsetzt.

Nahe dem freien Ende dieser Getriebestange 11 ist ein Stift oder dgl. als Mitnehmer 20 angebracht, an dem zwei Kurbeln 16 und 17 angreifen, die symmetrisch zu beiden Seiten der Stange angeordnet sind und von denen je eine auf den Wellen 4 befestigt ist, an denen außen die Schwenkhebel 2 zur Aufnahme des Handapparates 1 sitzen (Fig. 1). In Fig. 3 ist die Lage der Schwenkhebel in ihrer Ruhestellung, d.h. bei abgenommenem Handapparat, durch strichpunktierte Linien angedeutet. Ihre gegenläufigen Drehrichtungen beim Einhängen des Handapparates sind durch Pfeile 18 und 19 gekennzeichnet. Da die Kurbeln 16 und 17 die Drehbewegung mitmachen und ihre Kurbelarme unter den Mitnehmer 20 an der Getriebestange 11 fassen, wird letztere angehoben, so daß durch den einarmigen Hebel 8 der Schalter 10b geöffnet und der andere Schalter 10a geschlossen wird. Beim Abnehmen des Handapparates 1 wird die Getriebestange 11 durch eine nicht dargestellte Feder abwärts bis an einen Anschlag 21 bewegt, wodurch die Kurbeln 16 und 17 entgegen der Pfeile 18 und 19 gedreht werden. Der Anschlag kann auch von dem Schalter 10b gebildet werden. An den Kurbeln oder an den Wellen 4 greifen Drehfedern an (nicht dargestellt), durch deren Kraft die Kurbelarme am Mitnehmer 20 anliegend gehalten werden.

Bei einer anderen, nicht dargestellten Ausführung ist anstelle der Drehfedern eine Zugfeder eingesetzt, die an beiden Kurbeln 16 und 17 gegensinnig angreift und die Kurbelarme am Mitnehmer 20 hält. Zweckmäßig ist die Zugfeder dabei nur mittelbar mit den Kurbeln gekoppelt, indem sie an je einem kleinen Hebel eingehängt ist, der frei drehbar auf jeder Welle 4 gelagert ist. Der Hebel wird vom Kurbelarm in der einen Drehrichtung (entgegen dem Pfeil 18 bzw. 19) mitgenommen, wodurch die Zugfeder gespannt wird; dagegen bleibt er in der anderen Drehrichtung an einem Anschlag stehen, während sich der Kurbelarm von ihm löst, weiterdreht und die Getriebestange 11 anhebt.

Wird nun einer der Schwenkhebel, z.B. der rechte in Fig. 2, bei abgenommenem Handapparat mißbräuchlich gegen den anderen geschwenkt (Pfeil 15), so hebt zwar der Kurbelarm der Kurbel 17 vom Mitnehmer 20 ab, doch treten sonst keine Folgen für das Getriebe ein. Erst wenn der Schwenkhebel 2 am anderen anstößt und noch weiter bewegt wird, reagiert das Getriebe durch die Kurbel 16 des anderen Schwenkhebels so, als sei der Handapparat 1 aufgelegt worden. Dabei kann nichts zerstört oder beschädigt werden. Bei Wegnahme der Kraft 15 bewegen sich alle Schwenk- und anderen Hebel zurück in die Ausgangsstellung bei abgenommenem Händapparat. Entsprechendes gilt bei Verdrehen des linken Schwenkhebels 2 gegen den rechten, da die Anordnung symmetrisch ist.

Welle 4 und Schwenkhebel 2 sind zweckmäßig zu einer Einheit verbunden und von außen durch die Wand der Ablage 7 gesteckt. Durch Segmentierung sind die Wellenenden (Anschliff von einer oder zwei Seiten) beispielsweise zu steckbaren Schaftkupplungen ausgebildet, deren Gegenstücke die Kurbeln 16 und 17 sind. Gehalten werden die eingesteckten Wellen 4 durch einen Riegel oder Schieber (nicht gezeigt), der quer zu den Wellen verschiebbar ist und in eine umlaufende Rille der Welle eingreift. Der Schieber ist auf der Innenseite der Wand angeschraubt. Diese Verbindung ist von außen weder erkennbar noch angreifbar.

**Patentansprüche**

1. Handapparatablage für Münzfernsprecher, bei der durch den Handapparat (1) ein Hakenumschalter betätigt wird, **dadurch gekennzeichnet**, daß sie von zwei V-förmig zueinander stehenden einarmigen Schwenkhebeln (2) gebildet wird, die je auf einer Welle (4) befestigt sind, auf der im Geräteinnern jeweils eine Kurbel (16, 17) sitzt, die Teil eines mittelbaren Hebelgetriebes (8, 11) ist, das auf den Hakenumschalter (10a, 10b) wirkt.

2. Handapparatablage nach Anspruch 1 dadurch gekennzeichnet, daß die Kurbeln (16, 17) symmetrisch beiderseits einer Getriebestange (11) gegenläufig angeordnet sind und mit ihren Kurbelarmen auf einen Mitnehmer (20) der Getriebestange wirken, die mittels Gelenk (12) mit einem einarmigen Hebel (8) verbunden ist, dessen freies Ende die Schalter (10a, 10b) des Hakenumschalters betätigt.

3. Handapparatablage nach Anspruch 2, dadurch gekennzeichnet, daß die Kurbelarme der Kurbeln (16, 17) durch mittelbar auf sie wirkende Federkräfte am Mitnehmer (20) gehalten werden.

4. Handapparatablage nach Anspruch 3, dadurch gekennzeichnet, daß die Federkräfte jeweils an einem frei auf der Welle (4) drehbaren Hebel angreifen, der in der einen Drehrichtung beim Gegeneinanderschwenken der Schwenkhebel (2) von der Kurbel (16, 17) bei wachsender Federkraft mitgenommen wird und in der anderen Drehrichtung vor dem Auflegen des Handapparates (1) an einem Anschlag bei geringer Federkraft stehen bleibt.

5. Handapparatablage nach Anspruch 4, dadurch gekennzeichnet, daß die Getriebestange (11) mit einer Federkraft belastet ist, die der auf die Kurbeln (16, 17) wirkenden Federkraft entgegen gerichtet und größer als diese ist.

6. Handapparatablage nach Anspruch 5, dadurch gekennzeichnet, daß die Getriebestange (11) mittig am Hebel (8) angelenkt ist.

7. Handapparatablage nach Anspruch 6, dadurch gekennzeichnet, daß die Bewegung des Getriebes in die eine Richtung durch das Anschlagen der Schwenkhebel (2) an den Seitenwänden (6) der Ablage (7) und in die andere Richtung durch einen Anschlag (10b; 21) im Hebelgetriebe (8, 11) begrenzt wird.

8. Handapparatanlage nach Anspruch 7, dadurch gekennzeichnet, daß die Schwenkhebel (2) hantelförmig gestaltet und mit ihrer Welle (4) einstückig verbunden sind.

9. Handapparatablage nach Anspruch 8, dadurch gekennzeichnet, daß die Wellen (4) von außen durch die Wand der Ablage (7) in die Kurbeln (16, 17) gesteckt und im Geräteinnern durch einen jeweils in eine Rille der Welle eingreifenden Riegel in axialer Richtung fixiert sind.

## Claims

1. A cradle for a coin telephone where the handset (1) actuates a hook switch, **characterized in** that it is composed of two single-armed pivoting levers (2) positioned in a V arrangement in relation to each other, each of them being fastened on an axle (4) on each of which axles there is inside the device, a crank (16, 17) which forms part of an indirect lever drive mechanism (8, 11) which acts upon the hook switch (10a, 10b).

2. A cradle as claimed in Claim 1, characterized in that the cranks (16, 17) are disposed, oppositely oriented, symmetrically on either side of a drive rod (11) and act with their crank arms on a driver (20) of the drive rod which is connected by means of an articulation(12) to a single-armed lever (8) whose free end actuates the switches (10a, 10b) of the hook switch.

3. A cradle as claimed in Claim 2, characterized in that the crank arms of the cranks (16, 17) are held against the driver (20) by elastic forces acting indirectly on them.

4. A cradle as claimed in Claim 3, characterized in that the elastic forces act in each case upon a lever which is freely rotatable on the axle (4) and which in the one direction of rotation, as the elastic force increases, is carried along by the crank (16, 17) when the pivoting levers (2) swing towards each other and which in the other direction of rotation remains stationary against a stop, with little elastic force, before the handset (1) is replaced.

5. A cradle as claimed in Claim 4, characterized in that the drive rod (ii) is subjected to an elastic force which is directed in the opposite direction to the elastic force acting on the cranks (16, 17) and is greater than that force.

6. A cradle as claimed in Claim 5, characterized in that the drive rod (11) is articulated on the centre of the lever (8).

7. A cradle as claimed in Claim 6, characterized in that the movement of the drive system is limited in the one direction by the hitting of the pivoting levers (2) against the side walls (6) of the cradle (7) and in the other direction by a stop (10b; 21) in the lever drive mechanism (8, 11).

8. A cradle as claimed in Claim 7, characterized in that the pivoting levers (2) are shaped like dumbbells and integrally connected to their axle (4).

9. A cradle as claimed in Claim 8, characterized in that the axles (4) are inserted into the cranks (16, 17) from outside through the wall of the cradle (7) and fixed in the axial direction in the inside of the device by a bolt engaging, in each case, in a groove in the axle.

## Revendications

1. Dispositif de support pour un combiné d'appareil téléphonique à prépaiement, dans lequel le combiné (1) actionne un commutateur à crochet, caractérisé en ce qu'il est constitué de deux leviers pivotants monobras (2) placés en V l'un par rapport à l'autre, qui sont fixés chacun sur un arbre (4), sur lequel s'appuie à l'intérieur de l'appareil une manivelle (16, 17) qui constitue une partie d'une timonerie de levier intermédiaire (8, 11) et qui agit sur le commutateur à crochet (10a, 10b).

2. Dispositif de support selon la revendication 1, caractérisé en ce que les manivelles (16, 17) sont disposées en sens opposés symétriquement des deux côtés d'une barre de transmission (11) et agissent par leur bras de manivelle sur un organe d'entraînement (20) de la barre de transmission, cet organe étant relié à l'aide d'une articulation (12) à un levier monobras (8) dont l'extrémité libre actionne l'interrupteur (10a, 10b) du commutateur à crochet.

3. Dispositif de support selon la revendication 2, caractérisé en ce que les bras de manivelle des manivelles (16, 17) sont retenus par l'action des forces élastiques agissant sur eux au niveau de l'organe d'entraînement (20).

4. Dispositif de support selon la revendication 3, caractérisé en ce que les forces élastique agissent chacune sur un levier rotatif monté à rotation libre sur l'arbre (4), ce levier étant entraîné dans l'un des sens de rotation par le basculement en sens inverse du levier pivotant (2) de la manivelle (16, 17) pour des forces élastiques croissantes et qui, dans l'autre sens de rotation, reste en place sur une butée sous l'action d'une faible force élastique avant l'enlèvement du combiné (1).

5. Dispositif de support selon la revendication 4, caractérisé en ce que la barre de transmission (11) est sollicitée par une force élastique qui est dirigée en sens opposé de celle agissant sur la manivelle (16, 17) et qui est supérieure à celle-ci.

6. Dispositif de support selon la revendication 5, caractérisé en ce que la barre de transmission est articulée au milieu du levier (8).

7. Dispositif de support selon la revendication 6, caractérisé en ce que le déplacement de la timonerie est limité dans une direction par la butée du levier de pivotement (2) sur les parois latérales (6) du support (7) et dans l'autre direction par une butée (10b; 21) de la transmission à leviers (8, 11).

8. Dispositif de support selon la revendication 7, caractérisé en ce que les leviers de pivotement (2) sont conformés en forme d'haltères et sont reliés monobloc à leur arbre (4).

9. Dispositif de support selon la revendication 8, caractérisé en ce que les arbres (4) sont enfichés de l'extérieur à travers la paroi du support (7) dans les manivelles (16, 17) et sont fixés à l'intérieur de l'appareil chacun à l'aide d'un verrou engagé axialement dans une rainure de l'arbre.

Fig. 1

Fig. 2

Fig. 3